# FASCICULE DE BREVET EUROPEEN

(11) **EP 0 829 610 B1**
(45) Date de publication et mention de la délivrance du brevet: **04.06.2003**
(21) Numéro de dépôt: 97402055.4
(22) Date de dépôt: 03.09.1997
(51) Int. Cl.: E06B 3/66

(54) **Vitrage isolant calorifuge**
Thermisch isolierende Verglasung
Thermally insulating glazing

(30) Priorité: 03.09.1996 DE 29615243 U
(43) Date de publication de la demande: 18.03.1998
(73) Titulaire: SAINT-GOBAIN GLASS FRANCE, 92400 Courbevoie (FR)
(72) Inventeur: Geyer, Volker, 52066 Aachen (DE); Villari, Valentino, 41372 Niederknichten (DE); Haussler, Wulf, 52488 Jülich (DE); Holtmann, Klaus, 52249 Eschweiler (DE)
(74) Mandataire: Renous Chan, Véronique

(56) Documents cités:
- EP-A- 0 332 717
- FR-A- 2 641 272
- GB-A- 2 095 738
- US-A- 4 883 721
- US-H- H 975
- BERNING: "principles of design of architectural coatings" APPLIED OPTICS, vol. 22, no. 24, décembre 1993, pages 4127-4141, XP002090092 new york, E.-U.

## Description

La présente invention concerne un vitrage isolant calorifuge comportant trois feuilles de verre séparées entre elles par deux espaces intermédiaires, au moins deux desdites trois feuilles de verre étant munies d'un empilement de couches minces comportant au moins une couche fonctionnelle métallique à propriétés de réflexion des longueurs d'onde dans l'infrarouge et/ou dans le domaine du rayonnement solaire.

Un tel vitrage isolant est décrit dans le document DE 3 633 620 C2. Ce vitrage isolant présente intrinsèquement un coefficient de transfert thermique (valeur k) inférieur à 1 W/m² K grâce au remplissage des espaces ménagés entre les feuilles au moyen d'un gaz rare. Une diminution supplémentaire de la valeur k est possible grâce à la présence d'une feuille de verre supplémentaire à une certaine distance de la feuille de verre intérieure.

Le coefficient de transfert thermique d'un vitrage isolant est en substance déterminé par la puissance d'émission des surfaces de verre délimitant le ou les espaces intermédiaires entre les feuilles. La puissance d'émission est aussi qualifiée d'émissivité. En utilisant des vitrages comportant un revêtement faiblement émissif d'une émissivité ε < 0,1 sur la face tournée vers l'espace intermédiaire entre les feuilles, on peut presque interrompre l'échange par rayonnement entre les surfaces de verre, grâce à quoi, des effets d'économie d'énergie considérables peuvent être obtenus. US H 975 H décrit un vitrage conforme au préambule de la revendication 1.

Ce vitrage isolant connu réduit donc au maximum les déperditions thermiques depuis les locaux vitrés au moyen de tels vitrages vers l'extérieur. Il existe cependant des applications, par exemple dans des maisons à faible consommation d'énergie et/ou situées dans des régions très froides, dans lesquelles un coefficient de transmission d'énergie totale élevé (valeur G) est souhaité en plus du maintien de la faible valeur k. Le coefficient G, tel que défini dans la norme DIN 67507 et qui exprime le facteur solaire, est mesuré en pourcent et se compose de la somme de l'énergie transmise directement à travers le vitrage et de l'énergie réémise vers l'intérieur de la pièce ou de l'habitacle par le vitrage s'échauffant par absorption en raison des rayons de soleil absorbés.

L'invention a alors pour but de proposer un vitrage isolant du type mentionné en préambule présentant un coefficient k inférieur à 1,0 W/m².K et un coefficient de facteur solaire G supérieur à 60%.

Un autre but de l'invention est de ne pas dégrader l'aspect optique du vitrage isolant, notamment en conservant un niveau de transmission lumineuse suffisant.

Un autre but encore est d'obtenir une couleur en réflexion du vitrage isolant vers l'espace extérieur très neutre.

Ces buts sont atteints du fait que l'empilement de couches minces (12, 13) présente une émissivité ε < 0,1, lesdites trois feuilles de verre présentent une teneur en oxydes susceptibles d'absorber les longueurs d'onde du domaine du rayonnement solaire inférieur à 0,05%.

Selon une caractéristique avantageuse de l'invention, la transmission intégrée dans le domaine des longueurs d'onde comprises entre 300 nm et 2500 nm de chacune desdites trois feuilles de verre (1, 2, 3) est d'au moins 86%, de préférence égale à 88% pour une épaisseur de feuille de verre d'environ 4 mm.

De préférence, les oxydes susceptibles d'absorber les longueurs d'onde du domaine du rayonnement solaire sont les oxydes de fer total exprimés sous la forme Fe₂O₃.

Dans le cas d'une teneur en Fe₂O₃ inférieure à 0,02% en poids, la feuille de verre présente, dans le cas d'une épaisseur de feuille d'environ 4 mm, une transmission supérieure à 89% entre 300 nm et 2100 nm. Des valeurs de transmission inférieures à 89% n'apparaissent qu'au-delà de 2100 nm. Cependant, la transmission intégrée entre 300 nm et 2500 nm vaut dans ce cas 88%. Une teneur en Fe₂O₃ aussi faible offre l'avantage supplémentaire que les valeurs de transmission ne diminuent guère même dans le cas de feuilles sensiblement plus épaisses. Ainsi, même dans le cas d'une épaisseur de feuille de 12 mm, la transmission diminue de moins de 1%.

Une transmission suffisamment élevée de l'empilement de couches minces est obtenue par le fait qu'on choisit une structure de couches dont le maximum de transmission se trouve dans le domaine de la lumière visible, et qui présente à 800 nm une transmission lumineuse T_{L} de plus de 70%.

Avantageusement, la teneur en oxydes Fe₂O₃ est inférieure à 0,02%, de préférence à 600 ppm, de préférence encore inférieure à 100 ppm.

Une composition de verre servant à la réalisation des feuilles de verre selon l'invention comprend avantageusement les constituants ci-après selon des teneurs, exprimées en pourcentages pondéraux, définies par les limites suivantes

| | |
|---|---|
| SiO₂ | 69 à 75 % |
| AI₂O₃ | 0 à 3 % |
| B₂O₃ | 0 à 5 % |
| CaO | 2 à 10 % |
| MgO | < 2 % |
| Na₂O | 0 à 17 % |
| K₂O | 0 à 8 % |
| Se | 0 à 0,002 % |
| CoO | 0 à 0,001 % |
| Cr₂O₃ | 0 à 0,001 % |

Une autre composition de verre particulièrement préférée dans le cadre de l'invention comprend les constituants ci-après, en pourcentages pondéraux:

| | |
|---|---|
| SiO₂ | 71,2 % |
| Na₂O | 14,14 % |
| CaO | 9,49 % |
| MgO | 4,13 % |
| AI₂O₃ | 0,55 % |
| SO₃ | 0,412% |
| K₂O | 0,005 % |
| TiO₂ | 0,014 % |

avec Fe₂O₃ égal à environ 90 ppm.

Selon une caractéristique très avantageuse de l'invention, la couche fonctionnelle métallique de l'empilement est une couche d'argent d'épaisseur comprise entre 5 et 15 nm, notamment entre 8 et 9,5 nm.

L'empilement de couches minces suivant l'invention est réalisé de préférence par le fait qu'une couche diélectrique est tout d'abord appliquée de manière connue sur la surface de la feuille de verre pauvre en oxyde de fer, et que sur cette couche diélectrique, de manière également connue, est pulvérisée une autre couche diélectrique ou le cas échéant une couche métallique sacrificielle. Sur cette couche est disposée une couche d'argent, la couche d'argent présentant une épaisseur allant de préférence de 8 à 9,5 nm. Sur la couche d'argent peut être disposée une couche métallique sacrificielle ou, le cas échéant, directement une couche diélectrique, ainsi que, le cas échéant, des couches diélectriques supplémentaires.

De préférence, l'empilement de couches minces (12, 13) a la séquence suivante : verre / SnO₂ / ZnO / Ag / Ti ou Nb / Si₃N₄ ou ZnO/Si₃N₄ ou SnO₂ ou ZnO/SnO₂.

La séquence de l'empilement peut être également la suivante :
verre / SnO2 / NiCr / Ag / NiCr / SnO2

De manière très avantageuse, l'empilement de couches minces selon l'invention est en faces 3 et 5 du vitrage. (On rappelle que conventionnellement on numérote les faces du vitrage à partir de l'extérieur).

Dans le cadre de l'invention, les feuilles de verre ont de préférence une épaisseur comprise entre 9 et 12 mm et les espaces intermédiaires ont une épaisseur préférée d'environ 10 mm.

Pour ce qui y est des espaces intermédiaires, ils sont de manière avantageuse soit remplis d'un gaz rare soit mis sous vide.

Le vitrage isolant selon l'invention qui vient d'être décrit est remarquable en ce qu'il présente une transmission lumineuse T_{L} d'au moins 72% pour un facteur solaire G supérieur à 60% et un facteur k inférieur à 1W/m².K.

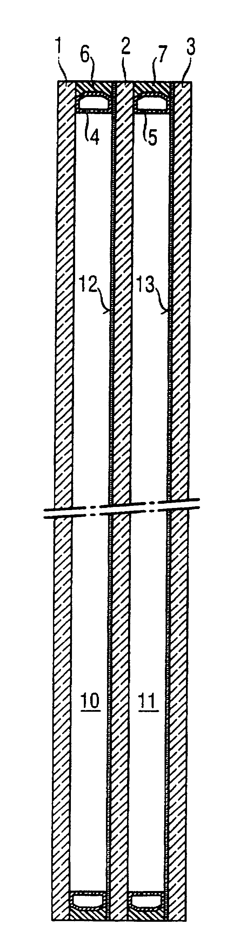

D'autres caractéristiques avantageuses et détails de l'invention ressortiront ci-après à la lecture de la description suivante d'un exemple de réalisation préféré faite en référence au dessin annexé.

Le dessin montre une vue en coupe transversale d'un vitrage isolant suivant l'invention.

Le vitrage isolant représenté dans le dessin comporte trois feuilles de verre 1, 2, 3 qui sont reliées les unes aux autres par l'intermédiaire des organes d'espacement 4 et 5 ainsi que des garnitures d'étanchéité 6, 7.

Dans le cas des feuilles de verre 1, 2, 3, il s'agit de feuilles de verre flotté en verre de silice d'une teneur en Fe₂O₃ de 0,01% en poids et d'une épaisseur de 4 mm. La feuille de verre médiane 2 est trempée par voie thermique. Les espaces intermédiaires ménagés entre les feuilles 10, 11 sont remplis d'un gaz isolant approprié. Les gaz rares, par lesquels un calorifugeage élevé est obtenu, sont particulièrement appropriés pour le remplissage.

Le vitrage isolant formé par les feuilles de verre 1, 2, 3 ainsi que par les organes d'espacement 4 et 5 peut être installé dans un châssis approprié. Des empilements de couches minces 12, 13 sont appliqués sur les surfaces des deux feuilles de verre intérieures 2 et 3 tournées vers l'extérieur une fois le vitrage monté, c'est-à-dire en faces 3 et 5 du vitrage. Dans ce cas sur les surfaces de verre est tout d'abord disposée une couche diélectrique de 30 nm d'épaisseur en SnO2 et, sur cette couche, une couche métallique sacrificielle en NiCr 80/20 d'une épaisseur de 2,5 nm. Directement sur la couche métallique sacrificielle se trouve une couche d'argent de 9 nm d'épaisseur. Sur cette couche d'argent est disposée une couche de NiCr 80/20 de 2,5 nm d'épaisseur, et, sur cette couche métallique sacrificielle une couche de SnO₂ de 30 nm d'épaisseur. La transmission intégrée dans le domaine des longueurs d'onde comprises entre 300 nm et 2500 nm d'une feuille de verre ainsi revêtue est de 88%.

Le dépôt des couches est réalisé de façon connue selon le procédé de pulvérisation cathodique assistée par champ magnétique dans une installation industrielle, en continu, comportant un nombre correspondant d'emplacement de cathodes, les couches d'oxydes étant pulvérisées à partir de cibles métalliques par pulvérisation cathodique réactive au moyen d'un gaz contenant de l'oxygène. Lors du dépôt, il faut veiller à ce que les paramètres soient fixés et réglés de telle manière que les épaisseurs de couches souhaitées soient obtenues.

On a réalisé le montage du vitrage isolant selon l'invention tel que les épaisseurs des deux espaces intérmédiaires 10, 11 ménagées entre les feuilles de verre 1, 2, 3 sont égales à 10 mm.

On a en outre rempli les deux espaces intermédiaires 10, 11 avec du Krypton.

Bien entendu, le vitage isolant peut également être rempli d'un autre gaz, de préférence d'un autre gaz rare. Il est cependant également possible de faire le vide dans les espaces intermédiaires entre les feuilles. De ce fait, le calorifugeage est augmenté encore davantage.

A titre d'exemple comparatif, on a réalisé un vitrage isolant avec la même configuration et les mêmes empilements que précédemment, à ceci près que les trois feuilles de verre, d'épaisseur identique, sont faites en un verre silico-sodo-calcique clair standard commercialisé par la société SAINT-GOBAIN VITRAGE sous la dénomination « Planilux ».

On a mesuré pour de tels vitrages isolants respectivement en pourcentages, la valeur de la transmission lumineuse T_{L}, la valeur du coefficient G selon la norme DIN 67507 et, en W/m².K, la valeur du coefficient de transfert thermique k.

Ces valeurs sont regroupées dans le tableau ci-dessous : on précise que l'exemple 1 est l'exemple relatif au vitrage isolant conforme à l'invention, que l'exemple 2 est l'exemple comparatif ci-dessous décrit :

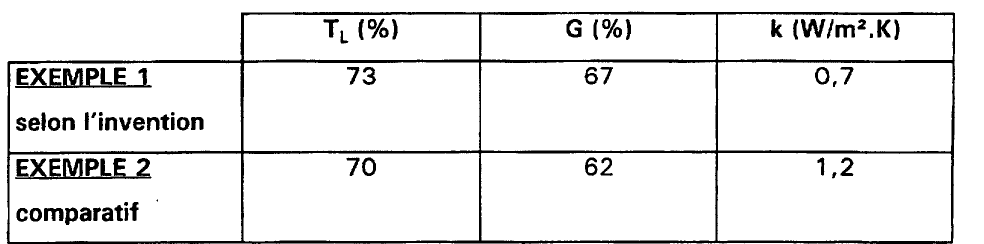

De ce tableau, il ressort clairement que le vitrage isolant présente de bien meilleures performances énergétiques que celui de l'exemple comparatif, la transmission lumineuse étant par ailleurs augmentée. En outre, le vitrage isolant selon l'invention présente un aspect très neutre en réfléxion.

## Revendications

1. Vitrage isolant calorifuge comportant trois feuilles de verre (1, 2, 3) séparées entre elles par deux espaces intermédiaires (10, 11), au moins deux desdites trois feuilles de verre (2, 3) étant munies d'un empilement de couches minces (12, 13) comportant au moins une couche fonctionnelle métallique à propriétés de réflexion des longueurs d'onde dans l'infrarouge et/ou dans le domaine du rayonnement solaire, ledit empilement de couches minces (12, 13) présentant une émissivité ε < 0,1, ***caractérisé en ce que*** lesdites trois feuilles de verre présentent une teneur en oxydes susceptibles d'absorber les longueurs d'onde du domaine du rayonnement solaire inférieure à 0,05%.

2. Vitrage selon la revendication 1, ***caractérisé en ce que*** la transmission intégrée dans le domaine des longueurs d'onde comprises entre 300 nm et 2500 nm de chacune desdites trois feuilles de verre (1, 2, 3) est d'au moins 86%, de préférence égale à 88% pour une épaisseur de feuille de verre d'environ 4 mm.

3. Vitrage selon la revendication 1 ou la revendication 2, ***caractérisé en ce que*** les oxydes susceptibles d'absorber les longueurs d'onde du domaine du rayonnement solaire sont les oxydes de fer total exprimés sous la forme Fe₂O₃.

4. Vitrage selon l'une quelconque des revendications précédentes, ***caractérisé en ce que*** la teneur en oxydes Fe₂O₃ est inférieure à 0,02%, de préférence à 600 ppm, de préférence encore inférieure à 100 ppm.

5. Vitrage selon l'une quelconque des revendications précédentes, ***caractérisé en ce que*** la couche fonctionnelle métallique dudit empilement (12, 13) est une couche d'argent d'épaisseur comprise entre 5 et 15 nm, notamment entre 8 et 9,5 nm.

6. Vitrage selon la revendication 5, ***caractérisé* en *ce que*** ledit empilement (12, 13) a la séquence suivante :
verre / SnO₂ ZnO / Ag / Ti ou Nb / Si₃N₄ ou ZnO/Si₃N₄ ou SnO₂ ou ZnO/SnO₂

7. Vitrage selon la revendication 5, ***caractérisé* en *ce que*** ledit empilement (12, 13) a la séquence suivante :
verre / SnO₂ / NiCr / Ag / NiCr / SnO₂

8. Vitrage selon l'une quelconque des revendications, ***caractérisé en ce que*** ledit empilement de couches minces (12, 13) est en faces 3 et 5 dudit vitrage.

9. Vitrage selon l'une quelconque des revendications précédentes, ***caractérisé en ce que*** les feuilles de verre (1, 2, 3) ont une épaisseur comprise entre 4 et 12 mm *et* **en *ce que*** les espaces intermédiaires (10, 11) ont une épaisseur environ égale à 10 mm.

10. Vitrage selon l'une quelconque des revendications précédentes, ***caractérisé en ce que*** les espaces intermédiaires (10, 11) sont remplis d'un gaz rare ou sont mis sous vide.

11. Vitrage selon l'une quelconque des revendications précédentes, **caractérisé en ce qu'**il présente une transmission lumineuse T_{L} d'au moins 72% pour un facteur solaire G supérieur à 60% et un facteur k inférieur à 1 W/m².K.

## Claims

1. Heat-insulating glazing comprising three sheets of glass (1, 2, 3) separated from one another by two intermediate spaces (10, 11), at least two of the said three sheets of glass (2, 3) being provided with a stack of thin layers (12, 13) comprising at least one metallic functional layer with properties of reflection of the wavelengths in the infrared and/or in the solar radiation range, the said stack of thin layers (12, 13) having an emissivity ε < 0.1, **characterised in that** the said three sheets of glass have a content of oxides able to absorb the wavelengths in the solar radiation range of less than 0.05%.

2. Glazing according to Claim 1, **characterised in that** the integrated transmission in the range of wavelengths between 300 nm and 2500 nm of each of the said three sheets of glass (1, 2, 3) is at least 86% and preferably 88% for a thickness of glass sheet of approximately 4 mm.

3. Glazing according to Claim 1 or Claim 2, **characterised in that** the oxides able to absorb the wavelengths in the solar radiation range are total iron oxides expressed in the form Fe₂O₃.

4. Glazing according to any one of the preceding claims, **characterised in that** the Fe₂O₃ oxide content is less than 0.02%, preferably 600 ppm, and preferably again less than 100 ppm.

5. Glazing according to any one of the preceding claims, **characterised in that** the metallic functional layer in the said stack (12, 13) is a layer of silver with a thickness of between 5 and 15 nm, in particular between 8 and 9.5 nm.

6. Glazing according to Claim 5, **characterised in that** the said stack (12, 13) has the following sequence:
glass/SnO₂/ZnO/Ag/Ti or Nb/Si₃N₄ or ZnO/Si₃N₄ or SnO₂ or ZnO/SnO₂

7. Glazing according to Claim 5, **characterised in that** the said stack (12, 13) has the following sequence:
glass/SnO₂/NiCr/Ag/NiCr/SnO₂.

8. Glazing according to any one of the claims, **characterised in that** the said stack of thin layers (12, 13) is on faces 3 and 5 of the said glazing.

9. Glazing according to any one of the preceding claims, **characterised in that** the sheets of glass (1, 2, 3) have a thickness of between 4 and 12 mm and **in that** the intermediate spaces (10, 11) have a thickness of approximately 10 mm.

10. Glazing according to any one of the preceding claims, **characterised in that** the intermediate spaces (10, 11) are filled with a rare gas or are put under vacuum.

11. Glazing according to any one of the preceding claims, **characterised in that** it has a light transmission T_{L} of at least 72% for a solar factor G greater than 60% and a factor k of less than 1 W/m².K.

## Patentansprüche

1. Wärmedämmende Isolierglasscheibe mit drei untereinander durch zwei Scheibenzwischenräume (10, 11) getrennten Einzelglasscheiben (1, 2, 3), wobei mindestens zwei der drei Einzelglasscheiben (2, 3) mit einem Dünnschichtsystem (12, 13) versehen sind, welches mindestens eine metallische Funktionsschicht mit Reflexionseigenschaften für Wellenlängen im Infrarotbereich und/oder im Bereich der Sonnenstrahlung hat, wobei das Dünnschichtsystem (12, 13) eine Emissivität ε < 0,1 aufweist, **dadurch gekennzeichnet, dass** die drei Einzelglasscheiben einen Gehalt an Wellenlängen im Bereich der Sonnenstrahlung absorbierenden Oxiden von weniger als 0,05 % aufweisen.

2. Glasscheibe nach Anspruch 1, **dadurch gekennzeichnet, dass** die integrierte Transmission jeder der drei Einzelglasscheiben (1, 2, 3) im Wellenlängenbereich zwischen 300 nm und 2500 nm mindestens 86 % beträgt, vorzugsweise gleich 88 % ist für eine Scheibendicke von ungefähr 4 mm.

3. Glasscheibe nach Anspruch 1 oder 2, **dadurch gekennzeichnet, dass** die die Wellenlängen im Bereich der Sonnenstrahlung absorbierenden Oxide in der Form Fe₂O₃ ausgedrükte gesamte Eisenoxide sind.

4. Glasscheibe nach einem der vorstehenden Ansprüche, **dadurch gekennzeichnet, dass** der Gehalt an Eisenoxiden Fe₂O₃ weniger als 0,02 %, vorzugsweise weniger als 600 ppm, noch bevorzugter weniger als 100 ppm beträgt.

5. Glasscheibe nach einem der vorstehenden Ansprüche, **dadurch gekennzeichnet, dass** die metallische Funktionsschicht des besagten Schichtsystems (12, 13) eine Silberschicht mit einer Dicke zwischen 5 und 15 nm, insbesondere zwischen 8 und 9,5 nm ist.

6. Glasscheibe nach Anspruch 5, **dadurch gekennzeichnet, dass** das Schichtsystem (12, 13) folgende Schichtfolge hat:
Glas / SnO₂ / ZnO / Ag / Ti oder Nb / Si₃N₄ oder ZnO / Si₃N₄ oder SnO₂ oder ZnO / SnO₂.

7. Glasscheibe nach Anspruch 5, **dadurch gekennzeichnet, dass** das Schichtsystem (12, 13) folgende Schichtfolge hat:
Glas / SnO₂ / NiCr / Ag / NiCr / SnO₂.

8. Glasscheibe nach einem der vorstehenden Ansprüche, **dadurch gekennzeichnet, dass** das Dünnschichtsystem (12, 13) sich auf den Seiten 3 und 5 der Glasscheibe befindet.

9. Glasscheibe nach einem der vorstehenden Ansprüche, **dadurch gekennzeichnet, dass** die Einzelglasscheiben (1, 2, 3) eine zwischen 4 und 12 mm liegende Dicke haben und dadurch, dass die Scheibenzwischenräume (10, 11) eine Dicke von ungefähr gleich 10 mm haben.

10. Glasscheibe nach einem der vorstehenden Ansprüche, **dadurch gekennzeichnet, dass** die Scheibenzwischenräume (10, 11) mit einem Edelgas gefüllt oder evakuiert sind.

11. Glasscheibe nach einem der vorstehenden Ansprüche, **dadurch gekennzeichnet, dass** sie eine Transmission T_{L} für sichtbares Licht von mindestens 72 % für einen Solarfaktor G von mehr als 60 % und einen k-Wert von weniger als 1W/m².K hat.
